# EUROPEAN PATENT APPLICATION

(11) **EP 4 628 926 A1**
(43) Date of publication of application: **08.10.2025**
(21) Application number: 23897275.6
(22) Date of filing: 16.10.2023
(51) Int. Cl.: G01S 7/481, G01S 17/34, G02B 6/12, G02B 6/124, G02B 6/42, G02F 1/29

(54) **LIGHT DETECTION DEVICE AND LIGHT DETECTION SYSTEM**

(30) Priority: 29.11.2022 JP 2022190176
(71) Applicant: Sony Semiconductor Solutions Corporation, Atsugi-shi, Kanagawa 243-0014 (JP)
(72) Inventor: MAEDA, Yuya, Atsugi-shi, Kanagawa 243-0014 (JP); YASU, Yohtaro, Atsugi-shi, Kanagawa 243-0014 (JP)
(74) Representative: MFG Patentanwälte Meyer-Wildhagen Meggle-Freund Gerhard PartG mbB
(86) International application number: PCT/JP2023/037345
(87) International publication number: WO 2024/116617

(57) **Abstract**

It is desirable to provide a photodetector that makes it possible to suppress incidence of a stray light component.

A photodetector (distance measurement apparatus 1) according to an embodiment of the present disclosure includes: an optical circuit (30) that is provided in a substrate (first substrate 101) containing silicon and includes a waveguide (15) that is able to transmit an optical signal from a light source (10); an antenna (41) that is provided in the substrate and is able to output the optical signal transmitted via the waveguide; a light-receiving element (51a, 51b) that is provided in the substrate and is able to receive the optical signal reflected by an object; and a light-blocking section (80) that is provided around at least one of the antenna (41) or the light-receiving element (51a, 51b).

## Description

### Technical Field

The present disclosure relates to a photodetector and a photodetection system.

### Background Art

A lidar apparatus (laser radar) including a beam deflector and a photodetection unit (photodiode) has been proposed (PTL 1).

### Citation List

### Patent Literature

PTL 1: International Publication No. WO2018/003852

### Summary of the Invention

It is desired, for a device that detects light, to suppress incidence of a stray light component.

It is desirable to provide a photodetector that makes it possible to suppress incidence of a stray light component.

A photodetector according to an embodiment of the present disclosure includes: an optical circuit that is provided in a substrate containing silicon and includes a waveguide that is able to transmit an optical signal from a light source; an antenna that is provided in the substrate and is able to output the optical signal transmitted via the waveguide; a light-receiving element that is provided in the substrate and is able to receive the optical signal reflected by an object; and a light-blocking section that is provided around at least one of the antenna or the light-receiving element.

A photodetection system according to an embodiment of the present disclosure includes: a light source that is able to generate an optical signal; an optical circuit that is provided in a substrate containing silicon and includes a waveguide that is able to transmit an optical signal from a light source; an antenna that is provided in the substrate and is able to output the optical signal transmitted via the waveguide; a light-receiving element that is provided in the substrate and is able to receive the optical signal reflected by an object; and a light-blocking section that is provided around at least one of the antenna or the light-receiving element.

### Brief Description of the Drawings

[FIG. 1] FIG. 1 is a diagram illustrating an example of a schematic configuration of a distance measurement apparatus which is an example of a photodetector according to an embodiment of the present disclosure.
[FIG. 2] FIG. 2 is a diagram illustrating an example of a signal generated by the distance measurement apparatus according to an embodiment of the present disclosure.
[FIG. 3] FIG. 3 is a diagram illustrating an example of a cross-sectional configuration of the distance measurement apparatus according to an embodiment of the present disclosure.
[FIG. 4] FIG. 4 is a diagram illustrating an example of a planar configuration of a portion of the distance measurement apparatus according to an embodiment of the present disclosure.
[FIG. 5] FIG. 5 is a diagram illustrating another example of the planar configuration of a portion of the distance measurement apparatus according to an embodiment of the present disclosure.
[FIG. 6] FIG. 6 is a diagram illustrating another example of the cross-sectional configuration of the distance measurement apparatus according to an embodiment of the present disclosure.
[FIG. 7] FIG. 7 is a diagram illustrating an example of a planar configuration of a portion of the distance measurement apparatus according to an embodiment of the present disclosure.
[FIG. 8] FIG. 8 is a diagram illustrating another example of the planar configuration of a portion of the distance measurement apparatus according to an embodiment of the present disclosure.
[FIG. 9] FIG. 9 is a diagram illustrating a configuration example of a distance measurement apparatus according to a comparative example.
[FIG. 10] FIG. 10 is a diagram illustrating a configuration example of a distance measurement apparatus according to a comparative example.
[FIG. 11] FIG. 11 is a diagram illustrating an example of a cross-sectional configuration of a distance measurement apparatus according to Modification Example 1 of the present disclosure.
[FIG. 12] FIG. 12 is a diagram illustrating an example of a planar configuration of a portion of the distance measurement apparatus according to Modification Example 1 of the present disclosure.
[FIG. 13] FIG. 13 is a diagram illustrating an example of a cross-sectional configuration of a distance measurement apparatus according to Modification Example 2 of the present disclosure.
[FIG. 14] FIG. 14 is a diagram illustrating another example of the cross-sectional configuration of the distance measurement apparatus according to Modification Example 2 of the present disclosure.
[FIG. 15] FIG. 15 is a diagram illustrating another example of the cross-sectional configuration of the distance measurement apparatus according to Modification Example 2 of the present disclosure.
[FIG. 16] FIG. 16 is a diagram illustrating another example of the cross-sectional configuration of the distance measurement apparatus according to Modification Example 2 of the present disclosure.
[FIG. 17] FIG. 17 is a block diagram depicting an example of schematic configuration of a vehicle control system.
[FIG. 18] FIG. 18 is a diagram of assistance in explaining an example of installation positions of an outside-vehicle information detecting section and an imaging section.
[FIG. 19] FIG. 19 is a view depicting an example of a schematic configuration of an endoscopic surgery system.
[FIG. 20] FIG. 20 is a block diagram depicting an example of a functional configuration of a camera head and a camera control unit (CCU).

### Modes for Carrying Out the Invention

Hereinafter, description is given in detail of embodiments of the present disclosure with reference to the drawings. It is to be noted that the description is given in the following order.
1. Embodiment
2. Modification Examples
3. Usage Example
4. Practical Application Examples

### <1. Embodiment>

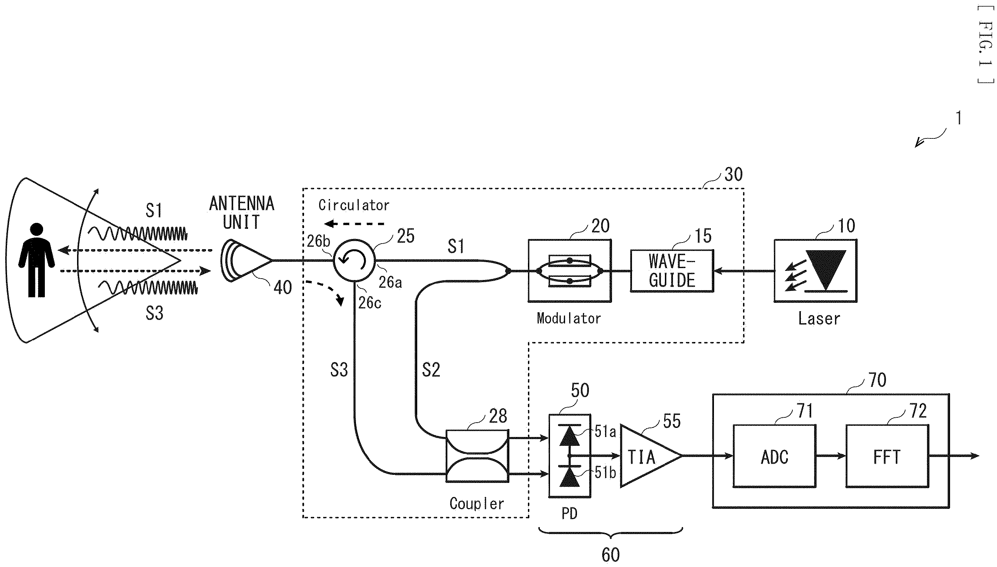

FIG. 1 is a diagram illustrating an example of a schematic configuration of a distance measurement apparatus which is an example of a photodetector according to an embodiment of the present disclosure. The photodetector is a device that is able to detect incident light. A distance measurement apparatus 1 as the photodetector is an apparatus that is able to measure a distance. The distance measurement apparatus 1 is, for example, an FMCW (Frequency Modulated Continuous Wave) distance measurement apparatus, and is applicable as an FMCW-LiDAR (Light Detection and Ranging).

The distance measurement apparatus 1 transmits and receives an optical signal to serve as modulated light of which a frequency is modulated, and may measure a distance to a measurement object, a speed of the measurement object, and the like. The distance measurement apparatus 1 may be manufactured by using a silicon-containing substrate, e.g., a silicon substrate, an SOI (Silicon On Insulator) substrate, or the like and utilizing a Silicon Photonics technology. The distance measurement apparatus 1 includes a photonic integrated circuit (PIC: Photonic Integrated Circuit). It is to be noted that the distance measurement apparatus 1, which is a lidar apparatus, can also be referred to as a laser radar apparatus.

As illustrated in FIG. 1, the distance measurement apparatus 1 includes a light source 10, an optical circuit 30, an antenna unit 40, a detection unit 60, and a signal processing unit 70. The distance measurement apparatus 1 irradiates a measurement target with a frequency-modulated optical signal (laser light) using the light source 10, the antenna unit 40, or the like, and may receive a delayed optical signal reflected by the measurement target.

In the distance measurement apparatus 1, for example, an optical signal obtained by causing reference light branched (separated) from output light of the light source 10 and reflected light (return light) reflected by the measurement target to interfere with each other is inputted to the detection unit 60, and a beat signal is detected that has a frequency corresponding to a difference between a frequency of the reference light and a frequency of the reflected light. The beat signal generated by receiving the reflected light from the measurement target serves as a signal corresponding to a distance to the measurement target.

The optical circuit 30, the antenna unit 40, the detection unit 60, the signal processing unit 70, and the like may be provided in one substrate (e.g., an SOI substrate), or may be provided separately in a plurality of substrates. The distance measurement apparatus 1 may have a structure (stacked structure) configured by stacking a plurality of substrates. The light source 10 may be mounted on the distance measurement apparatus 1, or may be provided outside the distance measurement apparatus 1. The photodetector (distance measurement apparatus 1) may be configured as a photodetection system including the light source 10, the optical circuit 30, the antenna unit 40, the detection unit 60, the signal processing unit 70, and the like.

The light source 10 illustrated in FIG. 1 is configured to be able to generate an optical signal. The light source 10 includes, for example, a light-emitting element, and is configured to be able to output an optical signal (laser light). As an example, the light source 10 is configured using, for example, a Group III-V compound semiconductor material, and has a configuration in which a p-type cladding layer, an active layer, and an n-type cladding layer are stacked. The light source 10 may generate laser light and emit the laser light.

The optical circuit 30 includes a waveguide 15, a modulator 20, a circulator 25, and an interference section 28. The waveguide 15 is configured to be able to transmit an optical signal from the light source 10. The waveguide 15 is, for example, an Si waveguide, and includes a core part and a cladding part having refractive indexes different from each other. An optical signal generated by the light source 10 is inputted to (incident on) the waveguide 15. The waveguide 15 is configured to convey (propagate) an optical signal to the modulator 20 from the light source 10.

The modulator 20 is configured to be able to modulate a frequency of the optical signal. The optical signal (laser light) is inputted from the light source 10 to the modulator 20 via the waveguide 15. The modulator 20 is configured to modulate the frequency of the optical signal transmitted via the waveguide 15 and to be able to output the frequency-modulated optical signal. The modulator 20 may output a signal (chirped signal) of which a frequency varies continuously over time.

The modulator 20 is a modulator (Modulator), and is configured using, for example, a Mach-Zehnder interferometer (Mach-Zehnder Interferometer). As an example, the modulator 20 may combine (couple) together laser light from the light source 10 and laser light of which a phase is adjusted by utilizing a carrier plasma effect, thereby outputting frequency-modulated laser light.

The modulator 20 outputs output light to serve as the frequency-modulated optical signal to the antenna unit 40 via the circulator 25. In the distance measurement apparatus 1, the output light of the modulator 20 is branched (separated) by, for example, a splitter. An optical signal S1 that is a portion of the output light of the modulator 20 is transmitted to a side of the antenna unit 40, and an optical signal S2 that is another portion of the output light of the modulator 20 is transmitted as reference light (local light) to a side of the interference section 28. For example, reference light having a power of 50% of power (light amount) of the output light of the modulator 20 is divided from the output light of the modulator 20, and is inputted to the interference section 28.

The circulator 25 has three ports, for example, and is configured to transmit optical signals between the ports. In the example illustrated in FIG. 1, the circulator 25 includes a first port 26a, a second port 26b, and a third port 26c. The first port 26a, the second port 26b, and the third port 26c are optically coupled, respectively, to the modulator 20, the antenna unit 40, and the interference section 28.

The optical signal S1, which is frequency-modulated laser light, is inputted from the modulator 20 to the first port 26a of the circulator 25. The circulator 25 may output the optical signal S1 inputted to the first port 26a to the antenna unit 40 from the second port 26b. An optical signal S3 that is reflected light (return light) is inputted to the second port 26b of the circulator 25 from the antenna unit 40. The circulator 25 may output the optical signal S3 inputted to the second port 26b to the interference section 28 from the third port 26c.

The antenna unit 40 is configured to be able to output an optical signal transmitted via the optical circuit 30 including the waveguide 15. In the example illustrated in FIG. 1, the optical signal S1 of which the frequency is modulated by the modulator 20 is transmitted to the antenna unit 40 via the circulator 25. The antenna unit 40 may emit, to the outside, the optical signal S1, which is the frequency-modulated laser light, as output light (irradiation light).

In addition, the antenna unit 40 is configured to be able to receive an optical signal reflected by an object. The antenna unit 40 may receive the optical signal S3, which is delayed laser light reflected by the object. The antenna unit 40 outputs the optical signal S3, which is reflected light, to the interference section 28 via the circulator 25.

The antenna unit 40 is a transmission antenna unit configured to be able to transmit an optical signal, and is also a reception antenna unit configured to be able to receive an optical signal. The antenna unit 40 may also be referred to as a transmission/reception antenna unit. The antenna unit 40 may irradiate a measurement target with frequency-modulated laser light, and may receive delayed laser light reflected by the measurement target. It is to be noted that the optical circuit 30 may include the antenna unit 40.

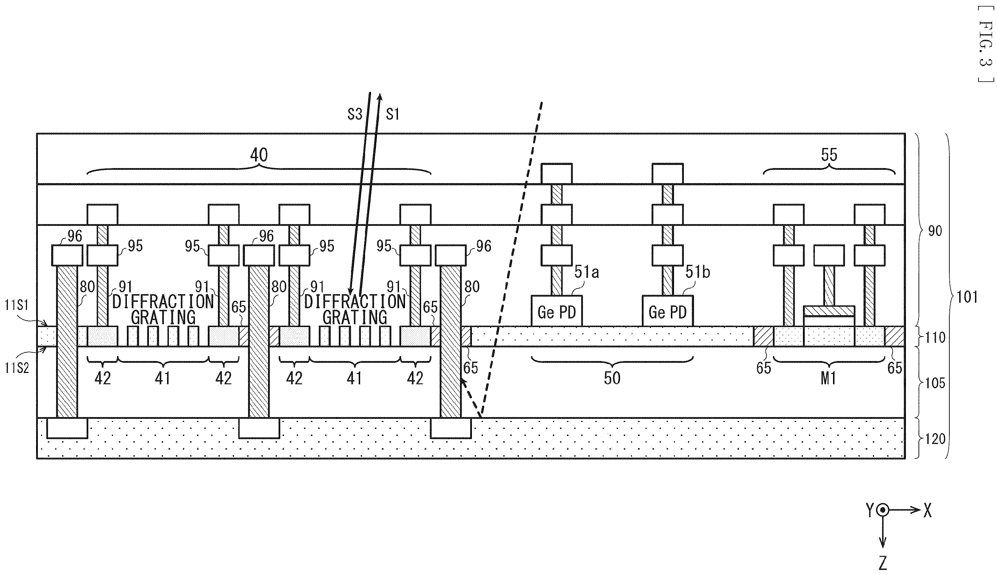

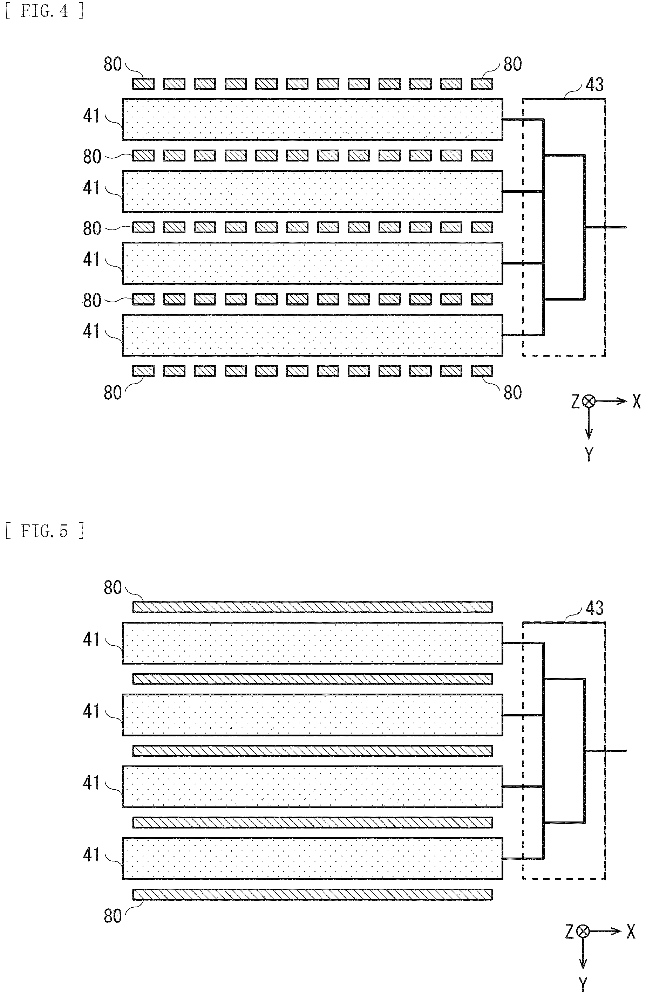

As described later (see FIGs. 3 and 4), the antenna unit 40 includes a plurality of antennas 41 (e.g., Si antenna), a plurality of heater sections 42, and an optical switch section 43. The heater section 42 is provided around the antenna 41, and is configured to be able to heat the antenna 41. The antenna 41 is heated by the heater section 42, thereby changing a refractive index of the antenna 41, thus changing an advancing direction of the optical signal S1 released from the antenna 41.

The optical switch section 43 includes a plurality of optical switches provided in a manner corresponding to the plurality of antennas 41, and is configured to be able to select the antenna 41 to be a transmission destination of the optical signal S1 from the modulator 20. Causing the optical switch section 43 to switch transmission paths of the optical signal S1 changes the antenna 41 to radiate the optical signal S1, thus changing a radiation angle (radiation direction) of the optical signal S1. In the distance measurement apparatus 1, temperature control by the heater section 42 and control by the optical switch section 43 make it possible to cause laser light as an optical signal to perform scanning (scan), as schematically illustrated in FIG. 1.

The interference section 28 is configured to be able to cause the reference light transmitted from the modulator 20 and the reflected light transmitted from the antenna unit 40 to interfere with each other, and to be able to output interfering light (interference light). The interference section 28 includes a coupler (Coupler), and can also be said to output an optical signal in which the reference light and the reflected light are coupled (combined).

In the example illustrated in FIG. 1, the interference section 28 is configured to cause the optical signal S2, which is reference light inputted from the modulator 20, and the optical signal S3, which is reflected light inputted from the antenna unit 40, to interfere with each other. The interference section 28 may transmit, to a light-receiving section 50 of the detection unit 60, an optical signal obtained by causing the reference light and the reflected light to interfere with each other.

The detection unit 60 includes the light-receiving section 50 including a light-receiving element 51 (a light-receiving element 51a and a light-receiving element 51b in FIG. 1) and an amplifier section 55, and is configured to be able to detect incident light. The light-receiving element 51 is configured using, for example, a photodiode PD. The light-receiving element 51 is configured to be able to receive an optical signal reflected by an object. In the example illustrated in FIG. 1, the light-receiving section 50 includes the light-receiving element 51a and the light-receiving element 51b, which serve as a balanced photodiode. The light-receiving element 51a and the light-receiving element 51b are coupled in series to each other. The light-receiving element 51a and the light-receiving element 51b are each configured to receive an optical signal via the interference section 28.

The light-receiving element 51 (in FIG. 1, the light-receiving elements 51a and 51b) may receive light and generate electric charge by photoelectric conversion to output a current. The light-receiving element 51 is configured to be able to output a beat signal based on the optical signal S2 from the modulator 20 and on the optical signal S3 reflected by the object. For example, in response to reception of an optical signal in which, as described above, the optical signal S2 which is the reference light and the optical signal S3 which is the reflected light are mixed (mixed), a signal corresponding to a photocurrent flowing through the light-receiving section 50 is generated and outputted as a beat signal. The detection unit 60 is configured to be able to receive an optical signal, and is configured to convert the optical signal into an electric signal.

The amplifier section 55 (an amplifier circuit) includes, for example, a transimpedance amplifier (TIA: Transimpedance Amplifier), and is configured to convert a current signal into a voltage signal. **In** the example illustrated in FIG. 1, the amplifier section 55 is electrically coupled to a node that couples together the light-receiving element 51a and the light-receiving element 51b. The amplifier section 55 may convert a current signal detected by the light-receiving section 50 into a voltage signal, and may output a beat signal, which is the voltage signal, to the signal processing unit 70. The beat signal has a frequency corresponding to a frequency difference between the optical signal S1 (as well as the optical signal S2) and the optical signal S3.

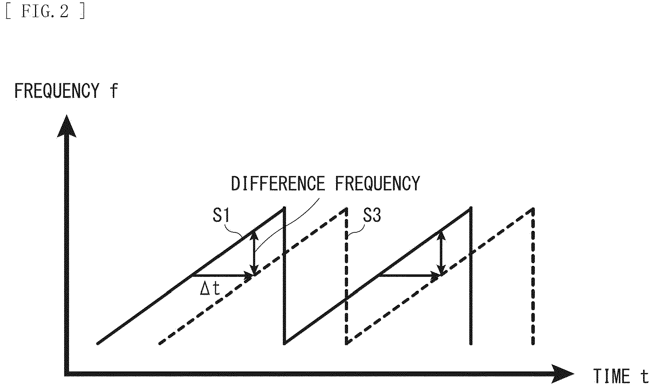

FIG. 2 is a diagram illustrating an example of a signal generated by the distance measurement apparatus according to the embodiment. In FIG. 2, the vertical axis indicates a frequency of an optical signal which is a chirped signal, and the horizontal axis indicates time. FIG. 2 illustrates the optical signal S1 which is transmission light to the measurement object and the optical signal S3 which is reception light from the measurement object.

The interference section 28 outputs, to the light-receiving section 50 of the detection unit 60, interference light generated by mixing together the optical signal S2 for reference corresponding to the transmitted optical signal S1 and the optical signal S3. The detection unit 60 may receive the interference light from the interference section 28 by the light-receiving section 50, and may generate and output the beat signal as described above.

The beat signal generated by receiving the interference light from the interference section 28 is a signal having a frequency corresponding to a difference between the frequency of the optical signal S1 and the frequency of the optical signal S3. It is possible, in the distance measurement apparatus 1, to determine the distance to the measurement object, the speed of the measurement object, and the like using this beat signal.

The signal processing unit 70 is a signal processing circuit, and is configured to be able to execute signaling processing. The signal processing unit 70 may calculate the distance between the distance measurement apparatus 1 and the measurement object by analyzing the frequency of the beat signal (beat frequency). In addition, the signal processing unit 70 may calculate the speed (relative speed) of the measurement object by utilizing Doppler shift of light.

As an example, the signal processing unit 70 performs arithmetic operation of the speed of the measurement object on the basis of a beat frequency in a case where a frequency of the laser light is increased over time (see FIG. 2), i.e., in the case of up-chirp, and on the basis of a beat frequency in a case where the frequency of the laser light is decreased over time, i.e., in the case of down-chirp.

For example, the signal processing unit 70 may emit laser light to serve as the optical signal S1 of which the frequency is modulated in a triangular wave form, and may calculate the speed of the measurement object, the distance to the measurement object, and the like using the beat frequencies of the respective beat signals for the continuous up-chirp and down-chirp cases.

In the example illustrated in FIG. 1, the signal processing unit 70 includes an AD conversion section 71 and an analysis section 72. The AD conversion section 71 is configured to convert an inputted analog signal into a digital signal. The AD conversion section 71 is an ADC (Analog to Digital Converter). A beat signal from the detection unit 60 is inputted to the AD conversion section 71.

The AD conversion section 71(AD conversion circuit) may sample the beat signal, and may convert the beat signal, which is an analog signal, into a digital signal. The AD conversion section 71 outputs, to the analysis section 72, a beat signal for each sampling point converted into a digital signal.

The analysis section 72 includes a circuit that performs signal processing on the beat signal, and is configured to be able to analyze the beat signal. The analysis section 72 is configured to be able to execute frequency analysis processing on the beat signal. As an example, the analysis section 72 performs FFT (Fast Fourier Transform: fast Fourier transform) on the beat signal converted into the digital signal to thereby calculate the distance to the measurement object, the speed of the measurement object, and the like.

The analysis section 72 may calculate the distance between the distance measurement apparatus 1 and the measurement object, and the like using the beat frequency obtained by the fast Fourier transform (FFT) processing, for example. The analysis section 72 may generate a signal related to the distance to the measurement object, a signal related to the speed of the measurement object, and the like, and may output the generated signals to the outside of the distance measurement apparatus 1.

The signal processing unit 70 is also a control unit, and is configured to be able to control each unit of the distance measurement apparatus 1. The signal processing unit 70 may include circuits such as a PLL (Phase Locked Loop) and a DAC (Digital to Analog Converter). The signal processing unit 70 is configured, for example, to supply the light source 10 with a signal to control the light source 10 and to control the light source 10. In addition, the signal processing unit 70 may be configured to be able to control the frequency modulation by the modulator 20, the scanning of an optical signal by the antenna unit 40, the AD conversion processing by the AD conversion section 71, and the like.

FIG. 3 is a diagram illustrating an example of a cross-sectional configuration of the distance measurement apparatus according to the embodiment. In addition, FIG. 4 is a diagram illustrating an example of a planar configuration of a portion of the distance measurement apparatus according to the embodiment. The distance measurement apparatus 1 is configured using a first substrate 101 containing silicon. The first substrate 101 is, for example, a semiconductor substrate such as an SOI substrate or a silicon substrate. In the example illustrated in FIG. 3, the first substrate 101 includes a first silicon layer 110, an insulating layer 105, a second silicon layer 120, and a wiring layer 90. The insulating layer 105 is, for example, a BOX (Buried Oxide) layer.

The distance measurement apparatus 1 has a configuration in which the wiring layer 90, the first silicon layer 110, the insulating layer 105, and the second silicon layer 120 are stacked in a Z-axis direction. It is to be noted that, as illustrated in FIG. 3, a direction orthogonal to the Z-axis direction is set as an X-axis direction, a direction orthogonal to the Z-axis direction and the X-axis direction is set as a Y-axis direction. In the following drawings, the arrow directions in FIG. 3 may be used, in some cases, as standards to express directions.

As illustrated in FIG. 3, the first silicon layer 110 has a first surface 11S1 and a second surface 11S2 opposed to each other. The second surface 11S2 is a surface on a side opposite to the first surface 11S1. The wiring layer 90 is provided on a side of the first surface 11S1 of the first silicon layer 110. The insulating layer 105 is provided on a side of the second surface 11S2 of the first silicon layer 110.

The first silicon layer 110 and the wiring layer 90 of the first substrate 101 are provided with the antenna unit 40, the optical circuit 30, the light-receiving section 50, the amplifier section 55, and the like, which are described above. The antenna unit 40, the optical circuit 30, the light-receiving section 50, the amplifier section 55, and the like are formed on the side of the first surface 11S1 of the first silicon layer 110. It can also be said that the antenna unit 40, the optical circuit 30, the light-receiving section 50, the amplifier section 55, and the like are provided on the first silicon layer 110.

The wiring layer 90 includes, for example, a conductive film and an insulating film, and includes a plurality of wirings, a via (VIA), an insulating film, and the like. The wiring layer 90 includes wiring of two or more layers, for example. The wiring layer 90 has a configuration in which the plurality of wirings is stacked with an insulating film interposed therebetween. The insulating film can also be referred to as an interlayer insulating film (interlayer insulating layer).

The wiring of the wiring layer 90 is formed using a metal material such as aluminum (Al), copper (Cu), or tungsten (W), for example. The wiring of the wiring layer 90 may be configured using polysilicon (Poly-Si) or another electrically-conductive material. The interlayer insulating film is formed using silicon oxide (SiO), silicon nitride (SiN), silicon oxynitride (SiON), or the like, for example.

The first substrate 101 is provided with the antenna unit 40 including the plurality of antennas 41, the heater section 42, and the optical switch section 43, as schematically illustrated in FIGs. 3 and 4. In the first substrate 101, the plurality of antennas 41 is arranged side by side. The antenna 41 is an Si antenna, and is formed in the first silicon layer 110. The plurality of antennas 41 is provided along the first surface 11S1 and the second surface 11S2 of the first silicon layer 110.

The antenna 41 is configured by, for example, an Si waveguide in which a plurality of grooves or a plurality of holes (holes) penetrating the first silicon layer 110 is formed. In the example illustrated in FIG. 3, the antenna 41 includes a diffraction grating configured using a plurality of circular holes (unillustrated in FIG. 4) provided cyclically.

The heater section 42 is arranged for each antenna 41 or for every plurality of antennas 41, and is provided, for example, at the end of the antenna 41. The heater section 42 is formed by a semiconductor region of the same electrically-conductive type as that of the antenna 41, for example, in the first silicon layer 110. As an example, the heater section 42 is, as in the example illustrated in FIGs. 3 and 4, electrically coupled to wiring 95 of the wiring layer 90 through a via 91, and is configured to be able to energize the antenna 41.

The heater section 42 supplies a current to the antenna 41 to thereby apply heat to the antenna 41, thus changing a refractive index of the antenna 41, which may change a direction of the optical signal S1 emitted from the diffraction grating of the antenna 41. It is to be noted that a lens section may be disposed above the antenna unit 40 for each antenna 41 or for every plurality of antennas 41. The antenna unit 40 may transmit and receive an optical signal via the lens section.

In addition, FIG. 3 illustrates the light-receiving element 51a and the light-receiving element 51b constituting the balanced photodiode, and a transistor M1 of the amplifier section 55. In the example illustrated in FIG. 1, the light-receiving element 51a and the light-receiving element 51b are each configured by a germanium photodiode (GePD), and are provided on the first silicon layer 110. It is to be noted that at least a portion of each of the light-receiving element 51a and the light-receiving element 51b may be provided in the first silicon layer 110.

The transistor M1 of the amplifier section 55 is, for example, a MOS transistor (MOSFET) to which a beat signal is inputted. A gate electrode, a gate oxide film, and the like are provided on the first surface 11S1 of the first silicon layer 110. In addition, a separation section 65 is provided in the first silicon layer 110, as in the example illustrated in FIG. 3. The separation section 65 has, for example, an STI (Shallow Trench Isolation) structure. The separation section 65 is configured by, for example, an insulating material, and separates elements from each other. The separation section 65 may be disposed to surround each of the antenna 41, the light-receiving element 51, the transistor M1, and the like in the first silicon layer 110.

The distance measurement apparatus 1 according to the present embodiment is provided with a light-blocking section 80. The light-blocking section 80 (light-blocking film) is configured by a member that blocks light. The light-blocking section 80 (light-blocking member) is provided around at least one of the antenna 41 or the light-receiving element 51. The light-blocking section 80 is configured using, for example, tungsten (W).

For example, as illustrated in FIGs. 3 and 4, the light-blocking section 80 is provided around the antenna 41 to suppress incidence of unnecessary light on the antenna 41. It is to be noted that the light-blocking section 80 may be configured by another metal material that blocks light, e.g., aluminum (Al), copper (Cu), or the like. The light-blocking section 80 may be configured using a metal compound. The light-blocking section 80 may be configured by a material that absorbs light.

In the example illustrated in FIG. 3, the light-blocking section 80 is provided next to the antenna 41 in the first silicon layer 110. The light-blocking section 80 is provided for each antenna 41, for example, and is also provided between the plurality of antennas 41 adjacent to each other. In addition, the light-blocking section 80 may be disposed between the antenna unit 40 and the light-receiving section 50 (or the light-receiving element 51), as in the example illustrated in FIG. 3. The light-blocking section 80 extends in a thickness direction of the first substrate 101. The light-blocking section 80 extends in the thickness direction orthogonal to the first surface 11S1 (or the second surface 11S2) of the first silicon layer 110, i.e., in the Z-axis direction.

In the distance measurement apparatus 1, as illustrated in FIGs. 3 and 4, a plurality of light-blocking sections 80 is arranged to sandwich the antenna 41. As illustrated in FIG. 4, the plurality of light-blocking sections 80 is arranged side by side, in a plan view, to sandwich the respective antennas 41. It is to be noted that, although unillustrated in FIG. 4, the plurality of circular holes, grooves, or the like may be formed in each antenna 41, as described above. As in the example illustrated in FIG. 5, the light-blocking section 80 may have a line (linear) shape, and may be disposed to sandwich each antenna 41. The light-blocking section 80 may be formed continuously to surround each antenna 41.

In addition, in the distance measurement apparatus 1, the light-blocking section 80 is provided to penetrate the first silicon layer 110 around at least one of the antenna 41 or the light-receiving element 51. The light-blocking section 80 can also be referred to as a light-blocking wall that blocks incident light. In the example illustrated in FIG. 3, the light-blocking section 80 is formed to reach the second silicon layer 120 around the antenna 41, and penetrates the first silicon layer 110 and the insulating layer 105.

The light-blocking section 80 is formed from wiring 96 of the wiring layer 90 to the second silicon layer 120, and is coupled to the second silicon layer 120. The light-blocking section 80 is configured by, for example, a through-via that electrically couples the wiring 96 of the wiring layer 90 and the second silicon layer 120 to each other. The light-blocking section 80 is electrically coupled to a semiconductor region of the second silicon layer 120, and is supplied with a predetermined potential (voltage), e.g., a GND potential (ground potential) via the wiring 96 of the wiring layer 90.

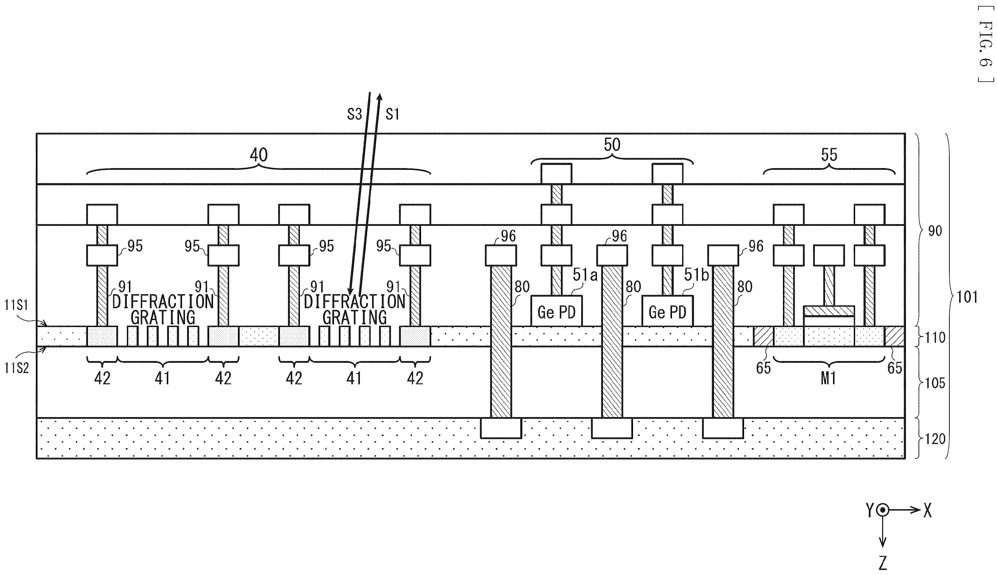

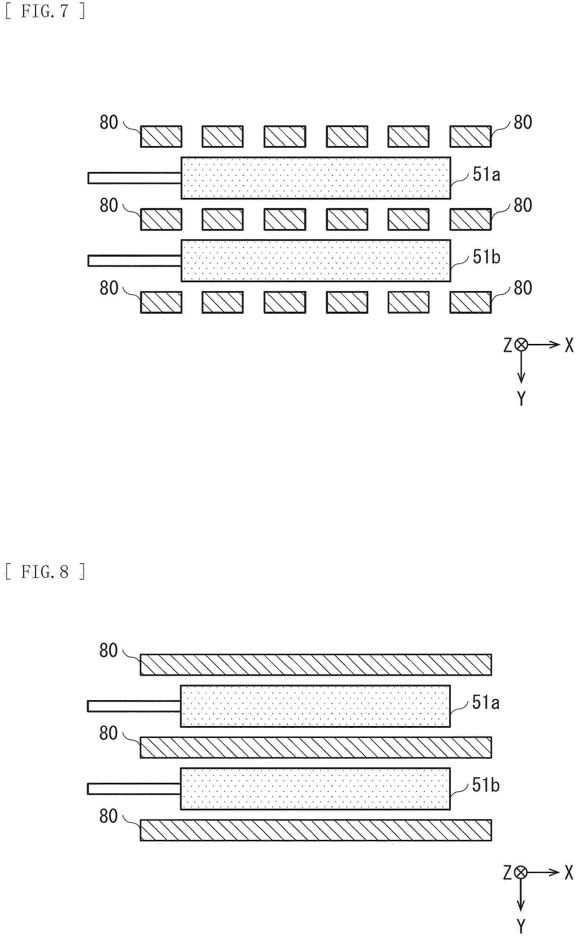

FIG. 6 is a diagram illustrating another example of the cross-sectional configuration of the distance measurement apparatus according to the embodiment. In addition, FIG. 7 is a diagram illustrating an example of a planar configuration of a portion of the distance measurement apparatus according to the embodiment. In the example illustrated in FIGs. 6 and 7, the light-blocking section 80 is provided around the light-receiving element 51 to suppress incidence of unnecessary light on the light-receiving element 51.

The light-blocking section 80 is provided next to the light-receiving element 51 in the first silicon layer 110. The light-blocking section 80 is provided for each light-receiving element 51, for example, and is also provided between a plurality of light-receiving elements 51 adjacent to each other. The light-blocking section 80 may be disposed between the light-receiving element 51a and the light-receiving element 51b, which serve as the balanced photodiode.

In the example illustrated in FIGs. 6 and 7, the plurality of light-blocking sections 80 is arranged to sandwich the light-receiving element 51. In addition, the light-blocking section 80 is formed to reach the second silicon layer 120 around each of the light-receiving elements 51a and 51b, and penetrates the first silicon layer 110 and the insulating layer 105.

It is to be noted that, as in the example illustrated in FIG. 8, the light-blocking section 80 may have a line (linear) shape, and may be disposed to sandwich each light-receiving element 51. The light-blocking section 80 may be continuously formed to surround the respective light-receiving elements 51. It is to be noted that, in the distance measurement apparatus 1, the light-blocking section 80 may be disposed both around the antenna 41 and around the light-receiving element 51. In the following, description is given of the distance measurement apparatus 1 according to the present embodiment, in comparison with a comparative example.

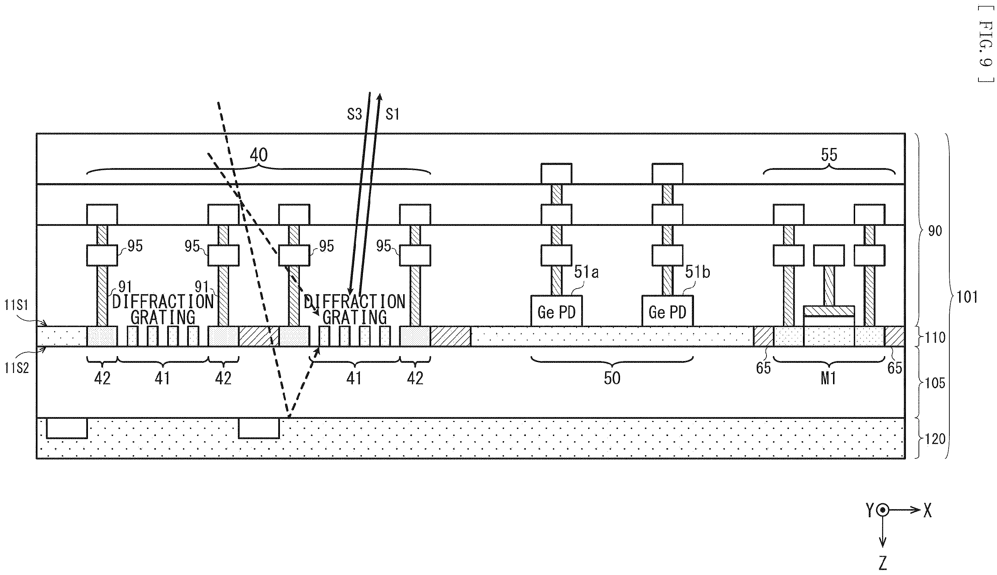

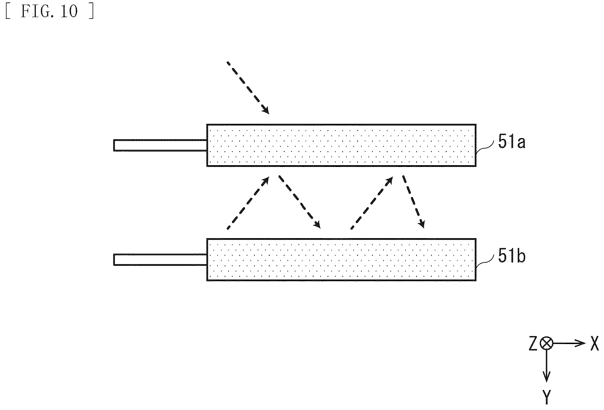

FIGs. 9 and 10 are each a diagram illustrating a configuration example of a distance measurement apparatus according to the comparative example. The comparative example concerns a case where the distance measurement apparatus 1 does not have the light-blocking section 80. In the case of the comparative example, stray light may possibly be incident on the antenna 41, as schematically indicated by broken arrows in FIG. 9. In addition, as schematically indicated by broken arrows in FIG. 10, stray light may also possibly be incident on the light-receiving element 51 (the light-receiving elements 51a and 51b). In these cases, it is conceivable that a stray light component is incident on an optical signal to cause a phase error (or frequency error) to be large, thus deteriorating distance measurement accuracy. In addition, there is also a possibility that a noise component mixing into the beat signal may be increased, thus making it unable to appropriately perform the distance measurement.

In the present embodiment, as described above, the light-blocking section 80 is provided around the antenna 41 and around the light-receiving element 51, for example. It is therefore possible to suppress incidence of a stray light component on the antenna 41, the light-receiving element 51, and the like. It is possible to suppress occurrence of a distance measurement error caused by the mixing of a stray light component having a frequency different from the frequency of the optical signal. It becomes possible to improve the distance measurement accuracy.

### [Workings and Effects]

The photodetector according to the present embodiment includes: an optical circuit (optical circuit 30) that is provided in a substrate (first substrate 101) containing silicon and includes a waveguide (waveguide 15) that is able to transmit an optical signal from a light source; an antenna (antenna 41) that is provided in the substrate and is able to output the optical signal transmitted via the waveguide; a light-receiving element (light-receiving element 51) that is provided in the substrate and is able to receive an optical signal reflected by an object; and a light-blocking section (light-blocking section 80) that is provided around at least one of the antenna or the light-receiving element.

The photodetector (distance measurement apparatus 1) according to the present embodiment includes the light-blocking section 80 provided around at least one of the antenna 41 or the light-receiving element 51. It is therefore possible to suppress incidence of unnecessary light on the antenna 41, the light-receiving element 51, and the like. It becomes possible to achieve a photodetector that makes it possible to suppress incidence of a stray light component.

Next, description is given of modification examples of the present disclosure. In the following, components similar to those of the foregoing embodiment are denoted by the same reference numerals, and descriptions thereof are omitted as appropriate.

### <2. Modification Examples>

### (2-1. Modification Example 1)

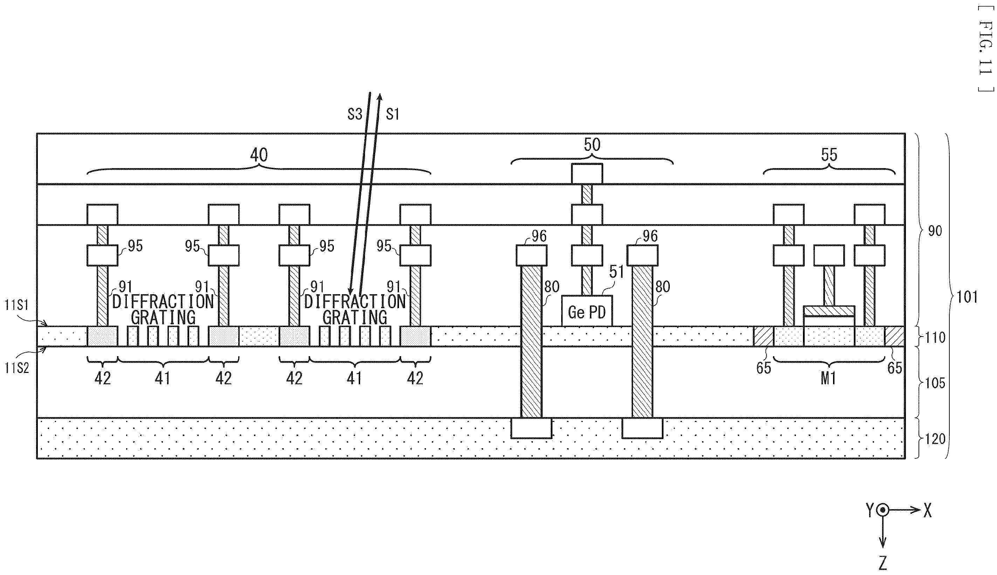

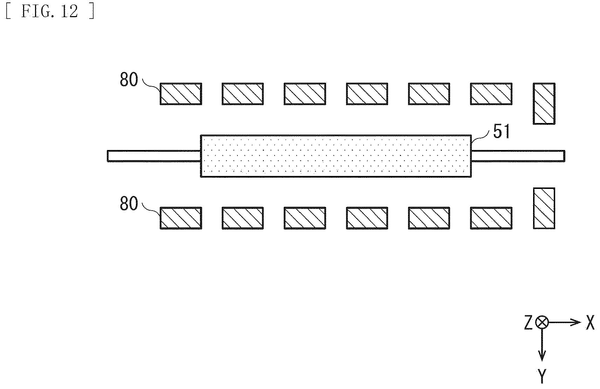

FIG. 11 is a diagram illustrating an example of a cross-sectional configuration of a distance measurement apparatus according to Modification Example 1 of the present disclosure. In addition, FIG. 12 is a diagram illustrating an example of a planar configuration of a portion of the distance measurement apparatus according to Modification Example 1. The foregoing embodiment describes the example in which the light-receiving section 50 is configured by a balanced photodiode. However, the light-receiving section 50 may be configured by a single photodiode, as in the example illustrated in FIGs. 11 and 12. In the example illustrated in FIGs. 11 and 12, the light-receiving section 50 includes one light-receiving element 51. Providing the light-blocking section 80 around the light-receiving element 51 makes it possible to suppress incidence of a stray light component on the light-receiving element 51.

### (2-2. Modification Example 2)

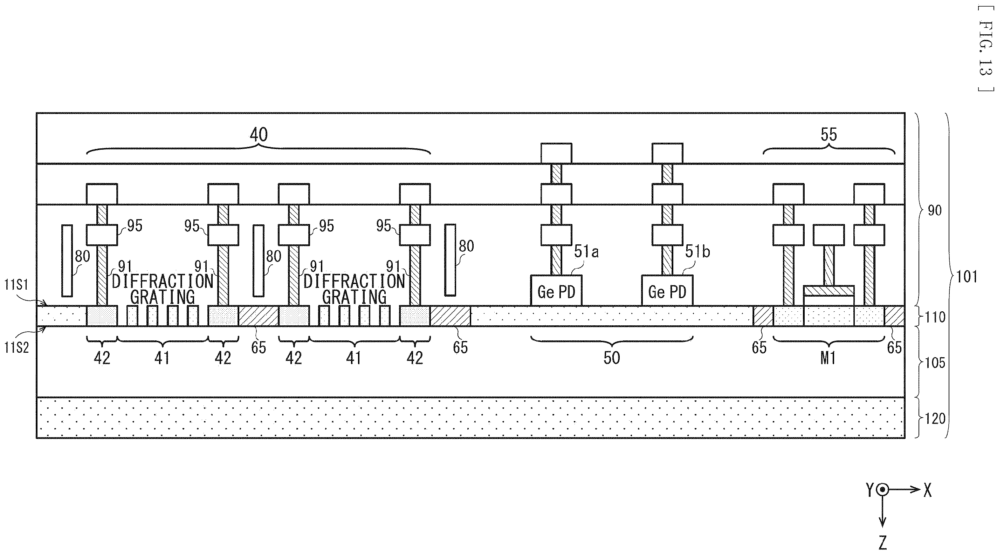

FIGs. 13 to 16 are each a diagram illustrating an example of a cross-sectional configuration of a distance measurement apparatus according to Modification Example 2. The light-blocking section 80 may be configured by a material having a refractive index lower than a refractive index of a medium therearound. As schematically illustrated in FIG. 13, the light-blocking section 80 may be configured by a cavity (air gap). The light-blocking section 80 may be configured by another material of a low refractive index.

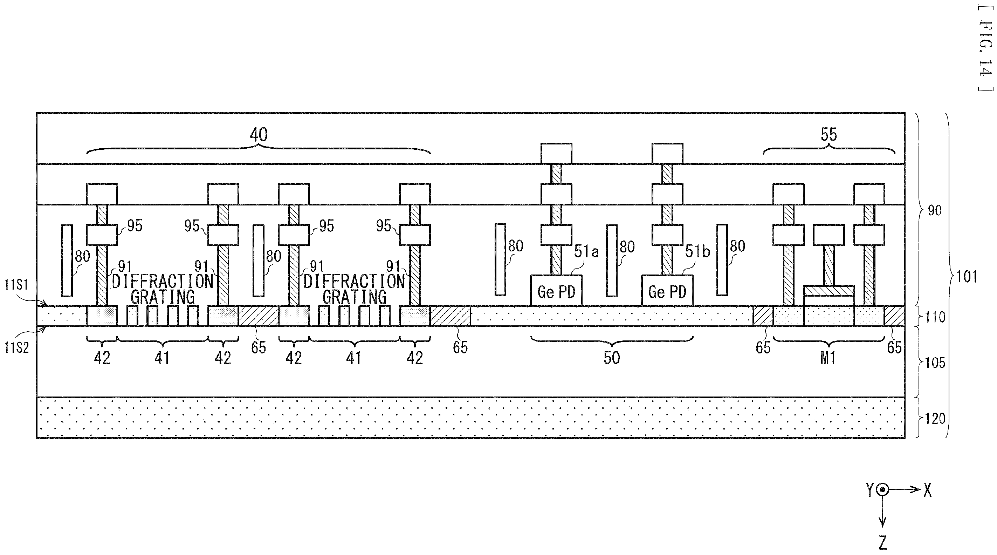

The light-blocking section 80 may be disposed around the antenna 41 as in the example illustrated in FIG. 13, or may be disposed around the light-receiving element 51 as in the example illustrated in FIG. 14. The light-blocking section 80 may be disposed both around the antenna 41 and around the light-receiving element 51. Also in the case of the present modification example, it is possible to obtain effects similar to those of the foregoing embodiment.

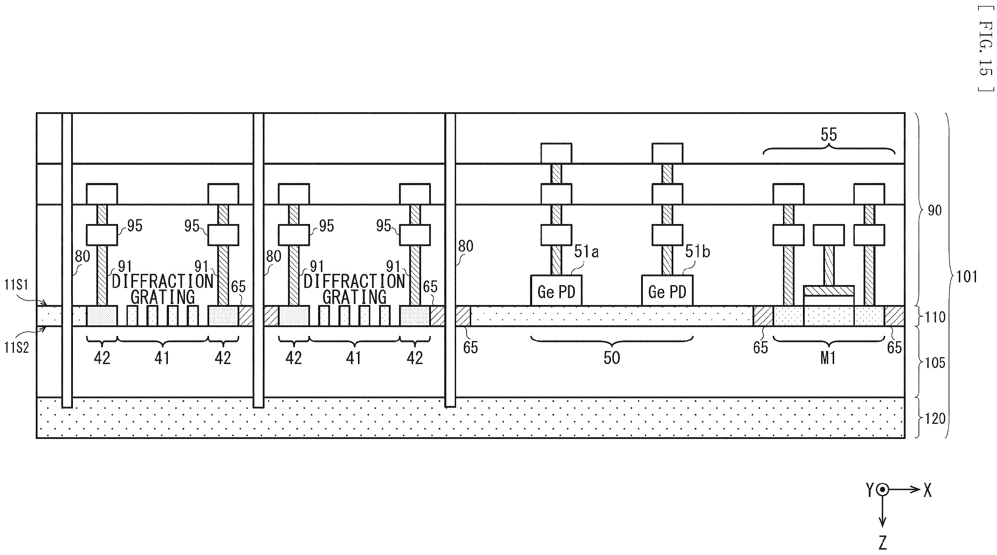

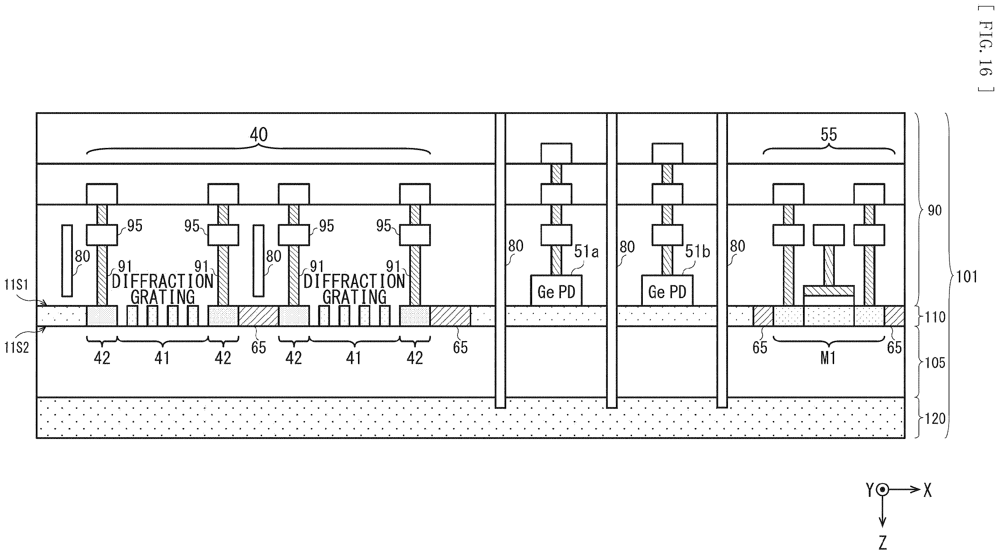

It is to be noted that the light-blocking section 80 may be provided to penetrate a plurality of layers, as illustrated in FIG. 15 or 16. In the examples illustrated in FIGs. 15 and 16, the light-blocking section 80 is provided to penetrate at least a portion of the wiring layer 90, the first silicon layer 110, and the insulating layer 105 and to reach the inside of the second silicon layer 120.

### (2-3. Modification Example 3)

The descriptions have been given, in the foregoing embodiment and modification examples, of the configuration example of the distance measurement apparatus 1. However, the configuration of the distance measurement apparatus 1 is merely exemplary, and is not limited to the above-described examples. For example, the distance measurement apparatus 1 may have a stacked structure configured by stacking a plurality of substrates. For example, the distance measurement apparatus 1 may be configured by stacking the first substrate 101 and a second substrate 102. In this case, the second substrate 102 may include, for example, the signal processing unit 70 described above.

### <3. Usage Examples>

For example, the photodetector described above is usable in a variety of cases of sensing light, including visible light, infrared light, ultraviolet light, and X-rays, as follows.
- Apparatuses that shoot images for appreciation, including digital cameras and mobile equipment having a camera function
- Apparatuses for traffic use, including onboard sensors that shoot images of the front, back, surroundings, inside, and so on of an automobile for safe driving such as automatic stop and for recognition of a driver's state, monitoring cameras that monitor traveling vehicles and roads, and distance measurement sensors that measure distances including a vehicle-to-vehicle distance
- Apparatuses for use in home electrical appliances including televisions, refrigerators, and air-conditioners to shoot images of a user's gesture and bring the appliances into operation in accordance with the gesture
- Apparatuses for medical treatment and health care use, including endoscopes and apparatuses that shoot images of blood vessels by receiving infrared light
- Apparatuses for security use, including monitoring cameras for crime prevention and cameras for individual authentication
- Apparatuses for beauty care use, including skin measuring apparatuses that shoot images of skin and microscopes that shoot images of scalp
- Apparatuses for sports use, including action cameras and wearable cameras for sports applications and the like
- Apparatuses for agricultural use, including cameras for monitoring the states of fields and crops

### <4. Practical Application Examples>

### (Example of Practical Application to Mobile Body)

The technology (the present technology) according to the present disclosure is applicable to a variety of products. For example, the technology according to the present disclosure may be achieved as a device mounted on any type of mobile body such as an automobile, an electric vehicle, a hybrid electric vehicle, a motorcycle, a bicycle, a personal mobility, an aircraft, a drone, a vessel, or a robot.

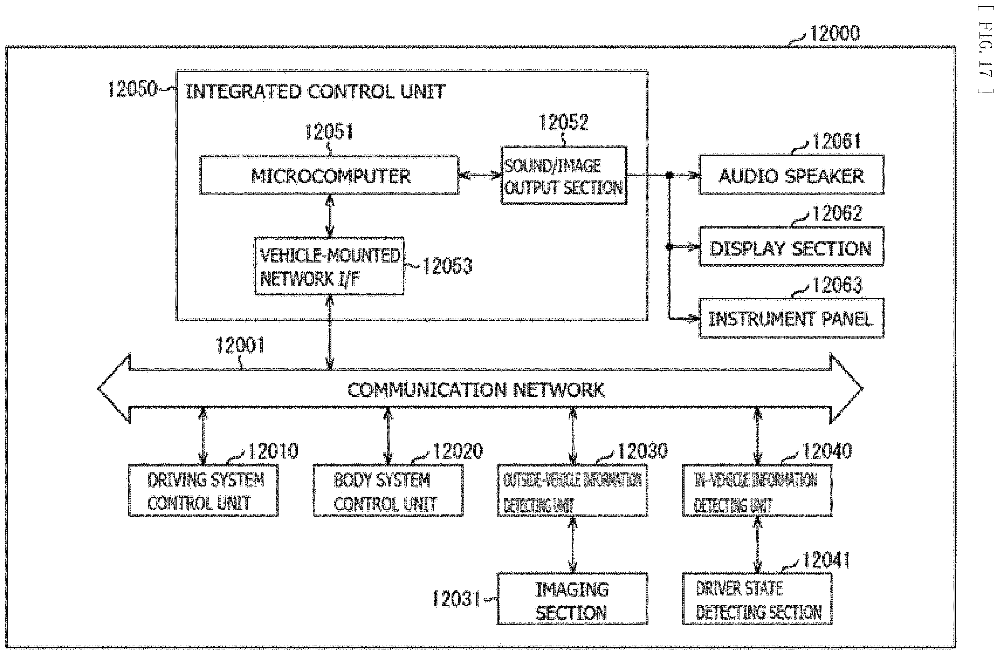

FIG. 17 is a block diagram depicting an example of schematic configuration of a vehicle control system as an example of a mobile body control system to which the technology according to an embodiment of the present disclosure can be applied.

The vehicle control system 12000 includes a plurality of electronic control units connected to each other via a communication network 12001. In the example depicted in FIG. 17, the vehicle control system 12000 includes a driving system control unit 12010, a body system control unit 12020, an outside-vehicle information detecting unit 12030, an in-vehicle information detecting unit 12040, and an integrated control unit 12050. In addition, a microcomputer 12051, a sound/image output section 12052, and a vehicle-mounted network interface (I/F) 12053 are illustrated as a functional configuration of the integrated control unit 12050.

The driving system control unit 12010 controls the operation of devices related to the driving system of the vehicle in accordance with various kinds of programs. For example, the driving system control unit 12010 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like.

The body system control unit 12020 controls the operation of various kinds of devices provided to a vehicle body in accordance with various kinds of programs. For example, the body system control unit 12020 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 12020. The body system control unit 12020 receives these input radio waves or signals, and controls a door lock device, the power window device, the lamps, or the like of the vehicle.

The outside-vehicle information detecting unit 12030 detects information about the outside of the vehicle including the vehicle control system 12000. For example, the outside-vehicle information detecting unit 12030 is connected with an imaging section 12031. The outside-vehicle information detecting unit 12030 makes the imaging section 12031 image an image of the outside of the vehicle, and receives the imaged image. On the basis of the received image, the outside-vehicle information detecting unit 12030 may perform processing of detecting an object such as a human, a vehicle, an obstacle, a sign, a character on a road surface, or the like, or processing of detecting a distance thereto.

The imaging section 12031 is an optical sensor that receives light, and which outputs an electric signal corresponding to a received light amount of the light. The imaging section 12031 can output the electric signal as an image, or can output the electric signal as information about a measured distance. In addition, the light received by the imaging section 12031 may be visible light, or may be invisible light such as infrared rays or the like.

The in-vehicle information detecting unit 12040 detects information about the inside of the vehicle. The in-vehicle information detecting unit 12040 is, for example, connected with a driver state detecting section 12041 that detects the state of a driver. The driver state detecting section 12041, for example, includes a camera that images the driver. On the basis of detection information input from the driver state detecting section 12041, the in-vehicle information detecting unit 12040 may calculate a degree of fatigue of the driver or a degree of concentration of the driver, or may determine whether the driver is dozing.

The microcomputer 12051 can calculate a control target value for the driving force generating device, the steering mechanism, or the braking device on the basis of the information about the inside or outside of the vehicle which information is obtained by the outside-vehicle information detecting unit 12030 or the in-vehicle information detecting unit 12040, and output a control command to the driving system control unit 12010. For example, the microcomputer 12051 can perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like.

In addition, the microcomputer 12051 can perform cooperative control intended for automated driving, which makes the vehicle to travel automatedly without depending on the operation of the driver, or the like, by controlling the driving force generating device, the steering mechanism, the braking device, or the like on the basis of the information about the outside or inside of the vehicle which information is obtained by the outside-vehicle information detecting unit 12030 or the in-vehicle information detecting unit 12040.

In addition, the microcomputer 12051 can output a control command to the body system control unit 12020 on the basis of the information about the outside of the vehicle which information is obtained by the outside-vehicle information detecting unit 12030. For example, the microcomputer 12051 can perform cooperative control intended to prevent a glare by controlling the headlamp so as to change from a high beam to a low beam, for example, in accordance with the position of a preceding vehicle or an oncoming vehicle detected by the outside-vehicle information detecting unit 12030.

The sound/image output section 12052 transmits an output signal of at least one of a sound and an image to an output device capable of visually or auditorily notifying information to an occupant of the vehicle or the outside of the vehicle. In the example of FIG. 17, an audio speaker 12061, a display section 12062, and an instrument panel 12063 are illustrated as the output device. The display section 12062 may, for example, include at least one of an on-board display and a head-up display.

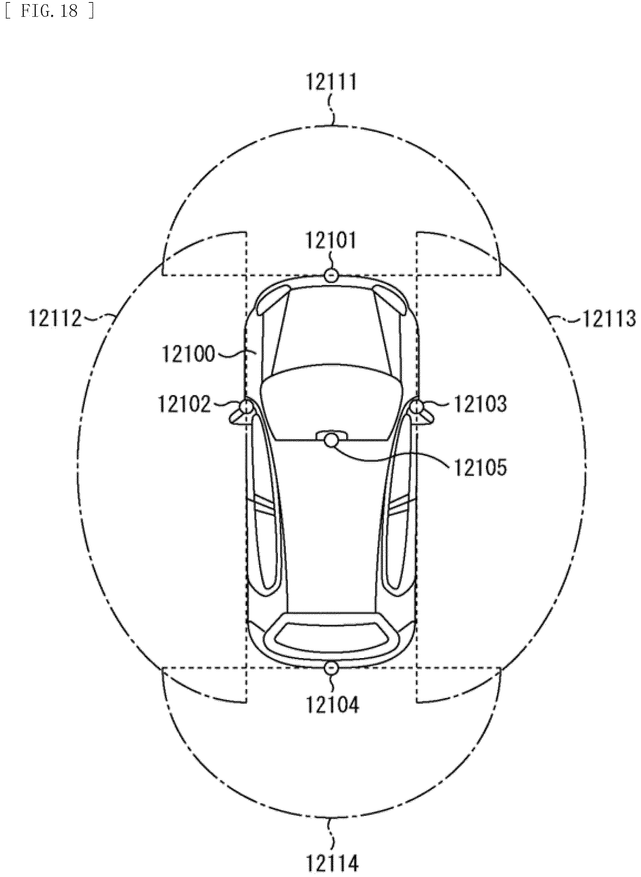

FIG. 18 is a diagram depicting an example of the installation position of the imaging section 12031.

In FIG. 18, the imaging section 12031 includes imaging sections 12101, 12102, 12103, 12104, and 12105.

The imaging sections 12101, 12102, 12103, 12104, and 12105 are, for example, disposed at positions on a front nose, sideview mirrors, a rear bumper, and a back door of the vehicle 12100 as well as a position on an upper portion of a windshield within the interior of the vehicle. The imaging section 12101 provided to the front nose and the imaging section 12105 provided to the upper portion of the windshield within the interior of the vehicle obtain mainly an image of the front of the vehicle 12100. The imaging sections 12102 and 12103 provided to the sideview mirrors obtain mainly an image of the sides of the vehicle 12100. The imaging section 12104 provided to the rear bumper or the back door obtains mainly an image of the rear of the vehicle 12100. The imaging section 12105 provided to the upper portion of the windshield within the interior of the vehicle is used mainly to detect a preceding vehicle, a pedestrian, an obstacle, a signal, a traffic sign, a lane, or the like.

Incidentally, FIG. 18 depicts an example of photographing ranges of the imaging sections 12101 to 12104. An imaging range 12111 represents the imaging range of the imaging section 12101 provided to the front nose. Imaging ranges 12112 and 12113 respectively represent the imaging ranges of the imaging sections 12102 and 12103 provided to the sideview mirrors. An imaging range 12114 represents the imaging range of the imaging section 12104 provided to the rear bumper or the back door. A bird's-eye image of the vehicle 12100 as viewed from above is obtained by superimposing image data imaged by the imaging sections 12101 to 12104, for example.

At least one of the imaging sections 12101 to 12104 may have a function of obtaining distance information. For example, at least one of the imaging sections 12101 to 12104 may be a stereo camera constituted of a plurality of imaging elements, or may be an imaging element having pixels for phase difference detection.

For example, the microcomputer 12051 can determine a distance to each three-dimensional object within the imaging ranges 12111 to 12114 and a temporal change in the distance (relative speed with respect to the vehicle 12100) on the basis of the distance information obtained from the imaging sections 12101 to 12104, and thereby extract, as a preceding vehicle, a nearest three-dimensional object in particular that is present on a traveling path of the vehicle 12100 and which travels in substantially the same direction as the vehicle 12100 at a predetermined speed (for example, equal to or more than 0 km/hour). Further, the microcomputer 12051 can set a following distance to be maintained in front of a preceding vehicle in advance, and perform automatic brake control (including following stop control), automatic acceleration control (including following start control), or the like. It is thus possible to perform cooperative control intended for automated driving that makes the vehicle travel automatedly without depending on the operation of the driver or the like.

For example, the microcomputer 12051 can classify three-dimensional object data on three-dimensional objects into three-dimensional object data of a two-wheeled vehicle, a standard-sized vehicle, a large-sized vehicle, a pedestrian, a utility pole, and other three-dimensional objects on the basis of the distance information obtained from the imaging sections 12101 to 12104, extract the classified three-dimensional object data, and use the extracted three-dimensional object data for automatic avoidance of an obstacle. For example, the microcomputer 12051 identifies obstacles around the vehicle 12100 as obstacles that the driver of the vehicle 12100 can recognize visually and obstacles that are difficult for the driver of the vehicle 12100 to recognize visually. Then, the microcomputer 12051 determines a collision risk indicating a risk of collision with each obstacle. In a situation in which the collision risk is equal to or higher than a set value and there is thus a possibility of collision, the microcomputer 12051 outputs a warning to the driver via the audio speaker 12061 or the display section 12062, and performs forced deceleration or avoidance steering via the driving system control unit 12010. The microcomputer 12051 can thereby assist in driving to avoid collision.

At least one of the imaging sections 12101 to 12104 may be an infrared camera that detects infrared rays. The microcomputer 12051 can, for example, recognize a pedestrian by determining whether or not there is a pedestrian in imaged images of the imaging sections 12101 to 12104. Such recognition of a pedestrian is, for example, performed by a procedure of extracting characteristic points in the imaged images of the imaging sections 12101 to 12104 as infrared cameras and a procedure of determining whether or not it is the pedestrian by performing pattern matching processing on a series of characteristic points representing the contour of the object. When the microcomputer 12051 determines that there is a pedestrian in the imaged images of the imaging sections 12101 to 12104, and thus recognizes the pedestrian, the sound/image output section 12052 controls the display section 12062 so that a square contour line for emphasis is displayed so as to be superimposed on the recognized pedestrian. The sound/image output section 12052 may also control the display section 12062 so that an icon or the like representing the pedestrian is displayed at a desired position.

The description has been given hereinabove of the mobile body control system to which the technology according to an embodiment of the present disclosure is applicable. The technology according to an embodiment of the present disclosure is applicable to the imaging section 12031, for example, of the configurations described above. Specifically, for example, the photodetector (distance measurement apparatus 1) or the like can be applied to the imaging section 12031. Applying the technology according to an embodiment of the present disclosure to the imaging section 12031 enables obtainment of a high-definition photographed image (e.g., distance image), thus making it possible to perform highly accurate control utilizing the photographed image in the mobile body control system.

### (Example of Practical Application to Endoscopic Surgery System)

The technology according to an embodiment of the present disclosure (present technology) is applicable to various products. For example, the technology according to an embodiment of the present disclosure may be applied to an endoscopic surgery system.

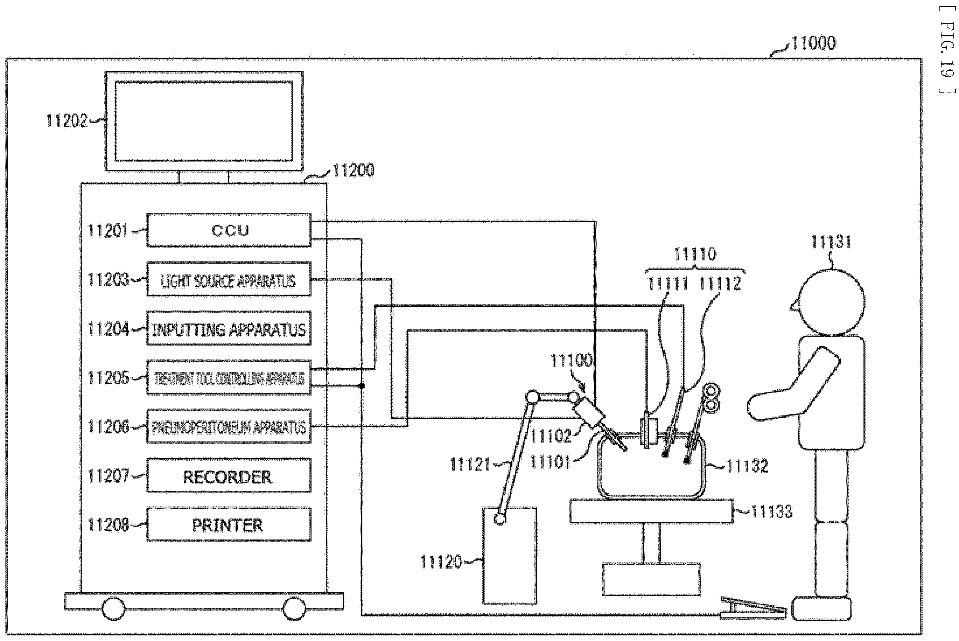

FIG. 19 is a view depicting an example of a schematic configuration of an endoscopic surgery system to which the technology according to an embodiment of the present disclosure (present technology) can be applied.

In FIG. 19, a state is illustrated in which a surgeon (medical doctor) 11131 is using an endoscopic surgery system 11000 to perform surgery for a patient 11132 on a patient bed 11133. As depicted, the endoscopic surgery system 11000 includes an endoscope 11100, other surgical tools 11110 such as a pneumoperitoneum tube 11111 and an energy device 11112, a supporting arm apparatus 11120 which supports the endoscope 11100 thereon, and a cart 11200 on which various apparatus for endoscopic surgery are mounted.

The endoscope 11100 includes a lens barrel 11101 having a region of a predetermined length from a distal end thereof to be inserted into a body cavity of the patient 11132, and a camera head 11102 connected to a proximal end of the lens barrel 11101. In the example depicted, the endoscope 11100 is depicted which includes as a rigid endoscope having the lens barrel 11101 of the hard type. However, the endoscope 11100 may otherwise be included as a flexible endoscope having the lens barrel 11101 of the flexible type.

The lens barrel 11101 has, at a distal end thereof, an opening in which an objective lens is fitted. A light source apparatus 11203 is connected to the endoscope 11100 such that light generated by the light source apparatus 11203 is introduced to a distal end of the lens barrel 11101 by a light guide extending in the inside of the lens barrel 11101 and is irradiated toward an observation target in a body cavity of the patient 11132 through the objective lens. It is to be noted that the endoscope 11100 may be a forward-viewing endoscope or may be an oblique-viewing endoscope or a side-viewing endoscope.

An optical system and an image pickup element are provided in the inside of the camera head 11102 such that reflected light (observation light) from the observation target is condensed on the image pickup element by the optical system. The observation light is photo-electrically converted by the image pickup element to generate an electric signal corresponding to the observation light, namely, an image signal corresponding to an observation image. The image signal is transmitted as RAW data to a CCU 11201.

The CCU 11201 includes a central processing unit (CPU), a graphics processing unit (GPU) or the like and integrally controls operation of the endoscope 11100 and a display apparatus 11202. Further, the CCU 11201 receives an image signal from the camera head 11102 and performs, for the image signal, various image processes for displaying an image based on the image signal such as, for example, a development process (demosaic process).

The display apparatus 11202 displays thereon an image based on an image signal, for which the image processes have been performed by the CCU 11201, under the control of the CCU 11201.

The light source apparatus 11203 includes a light source such as, for example, a light emitting diode (LED) and supplies irradiation light upon imaging of a surgical region to the endoscope 11100.

An inputting apparatus 11204 is an input interface for the endoscopic surgery system 11000. A user can perform inputting of various kinds of information or instruction inputting to the endoscopic surgery system 11000 through the inputting apparatus 11204. For example, the user would input an instruction or a like to change an image pickup condition (type of irradiation light, magnification, focal distance or the like) by the endoscope 11100.

A treatment tool controlling apparatus 11205 controls driving of the energy device 11112 for cautery or incision of a tissue, sealing of a blood vessel or the like. A pneumoperitoneum apparatus 11206 feeds gas into a body cavity of the patient 11132 through the pneumoperitoneum tube 11111 to inflate the body cavity in order to secure the field of view of the endoscope 11100 and secure the working space for the surgeon. A recorder 11207 is an apparatus capable of recording various kinds of information relating to surgery. A printer 11208 is an apparatus capable of printing various kinds of information relating to surgery in various forms such as a text, an image or a graph.

It is to be noted that the light source apparatus 11203 which supplies irradiation light when a surgical region is to be imaged to the endoscope 11100 may include a white light source which includes, for example, an LED, a laser light source or a combination of them. Where a white light source includes a combination of red, green, and blue (RGB) laser light sources, since the output intensity and the output timing can be controlled with a high degree of accuracy for each color (each wavelength), adjustment of the white balance of a picked up image can be performed by the light source apparatus 11203. Further, in this case, if laser beams from the respective RGB laser light sources are irradiated time-divisionally on an observation target and driving of the image pickup elements of the camera head 11102 are controlled in synchronism with the irradiation timings. Then images individually corresponding to the R, G and B colors can be also picked up time-divisionally. According to this method, a color image can be obtained even if color filters are not provided for the image pickup element.

Further, the light source apparatus 11203 may be controlled such that the intensity of light to be outputted is changed for each predetermined time. By controlling driving of the image pickup element of the camera head 11102 in synchronism with the timing of the change of the intensity of light to acquire images time-divisionally and synthesizing the images, an image of a high dynamic range free from underexposed blocked up shadows and overexposed highlights can be created.

Further, the light source apparatus 11203 may be configured to supply light of a predetermined wavelength band ready for special light observation. In special light observation, for example, by utilizing the wavelength dependency of absorption of light in a body tissue to irradiate light of a narrow band in comparison with irradiation light upon ordinary observation (namely, white light), narrow band observation (narrow band imaging) of imaging a predetermined tissue such as a blood vessel of a superficial portion of the mucous membrane or the like in a high contrast is performed. Alternatively, in special light observation, fluorescent observation for obtaining an image from fluorescent light generated by irradiation of excitation light may be performed. In fluorescent observation, it is possible to perform observation of fluorescent light from a body tissue by irradiating excitation light on the body tissue (autofluorescence observation) or to obtain a fluorescent light image by locally injecting a reagent such as indocyanine green (ICG) into a body tissue and irradiating excitation light corresponding to a fluorescent light wavelength of the reagent upon the body tissue. The light source apparatus 11203 can be configured to supply such narrow-band light and/or excitation light suitable for special light observation as described above.

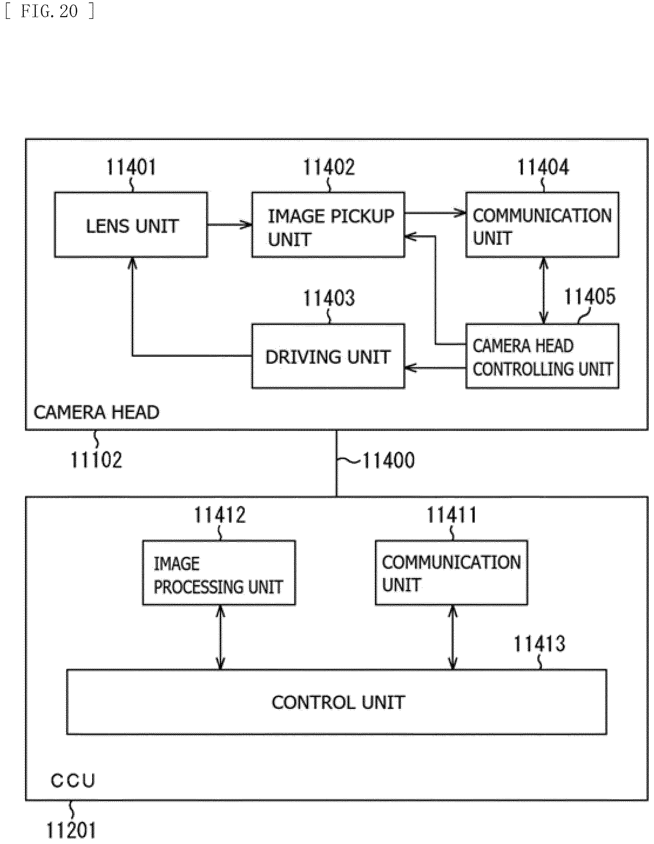

FIG. 20 is a block diagram depicting an example of a functional configuration of the camera head 11102 and the CCU 11201 depicted in FIG. 19.

The camera head 11102 includes a lens unit 11401, an image pickup unit 11402, a driving unit 11403, a communication unit 11404 and a camera head controlling unit 11405. The CCU 11201 includes a communication unit 11411, an image processing unit 11412 and a control unit 11413. The camera head 11102 and the CCU 11201 are connected for communication to each other by a transmission cable 11400.

The lens unit 11401 is an optical system, provided at a connecting location to the lens barrel 11101. Observation light taken in from a distal end of the lens barrel 11101 is guided to the camera head 11102 and introduced into the lens unit 11401. The lens unit 11401 includes a combination of a plurality of lenses including a zoom lens and a focusing lens.

The number of image pickup elements which is included by the image pickup unit 11402 may be one (single-plate type) or a plural number (multi-plate type). Where the image pickup unit 11402 is configured as that of the multi-plate type, for example, image signals corresponding to respective R, G and B are generated by the image pickup elements, and the image signals may be synthesized to obtain a color image. The image pickup unit 11402 may also be configured so as to have a pair of image pickup elements for acquiring respective image signals for the right eye and the left eye ready for three dimensional (3D) display. If 3D display is performed, then the depth of a living body tissue in a surgical region can be comprehended more accurately by the surgeon 11131. It is to be noted that, where the image pickup unit 11402 is configured as that of stereoscopic type, a plurality of systems of lens units 11401 are provided corresponding to the individual image pickup elements.

Further, the image pickup unit 11402 may not necessarily be provided on the camera head 11102. For example, the image pickup unit 11402 may be provided immediately behind the objective lens in the inside of the lens barrel 11101.

The driving unit 11403 includes an actuator and moves the zoom lens and the focusing lens of the lens unit 11401 by a predetermined distance along an optical axis under the control of the camera head controlling unit 11405. Consequently, the magnification and the focal point of a picked up image by the image pickup unit 11402 can be adjusted suitably.

The communication unit 11404 includes a communication apparatus for transmitting and receiving various kinds of information to and from the CCU 11201. The communication unit 11404 transmits an image signal acquired from the image pickup unit 11402 as RAW data to the CCU 11201 through the transmission cable 11400.

In addition, the communication unit 11404 receives a control signal for controlling driving of the camera head 11102 from the CCU 11201 and supplies the control signal to the camera head controlling unit 11405. The control signal includes information relating to image pickup conditions such as, for example, information that a frame rate of a picked up image is designated, information that an exposure value upon image picking up is designated and/or information that a magnification and a focal point of a picked up image are designated.

It is to be noted that the image pickup conditions such as the frame rate, exposure value, magnification or focal point may be designated by the user or may be set automatically by the control unit 11413 of the CCU 11201 on the basis of an acquired image signal. In the latter case, an auto exposure (AE) function, an auto focus (AF) function and an auto white balance (AWB) function are incorporated in the endoscope 11100.

The camera head controlling unit 11405 controls driving of the camera head 11102 on the basis of a control signal from the CCU 11201 received through the communication unit 11404.

The communication unit 11411 includes a communication apparatus for transmitting and receiving various kinds of information to and from the camera head 11102. The communication unit 11411 receives an image signal transmitted thereto from the camera head 11102 through the transmission cable 11400.

Further, the communication unit 11411 transmits a control signal for controlling driving of the camera head 11102 to the camera head 11102. The image signal and the control signal can be transmitted by electrical communication, optical communication or the like.

The image processing unit 11412 performs various image processes for an image signal in the form of RAW data transmitted thereto from the camera head 11102.

The control unit 11413 performs various kinds of control relating to image picking up of a surgical region or the like by the endoscope 11100 and display of a picked up image obtained by image picking up of the surgical region or the like. For example, the control unit 11413 creates a control signal for controlling driving of the camera head 11102.

Further, the control unit 11413 controls, on the basis of an image signal for which image processes have been performed by the image processing unit 11412, the display apparatus 11202 to display a picked up image in which the surgical region or the like is imaged. Thereupon, the control unit 11413 may recognize various objects in the picked up image using various image recognition technologies. For example, the control unit 11413 can recognize a surgical tool such as forceps, a particular living body region, bleeding, mist when the energy device 11112 is used and so forth by detecting the shape, color and so forth of edges of objects included in a picked up image. The control unit 11413 may cause, when it controls the display apparatus 11202 to display a picked up image, various kinds of surgery supporting information to be displayed in an overlapping manner with an image of the surgical region using a result of the recognition. Where surgery supporting information is displayed in an overlapping manner and presented to the surgeon 11131, the burden on the surgeon 11131 can be reduced and the surgeon 11131 can proceed with the surgery with certainty.

The transmission cable 11400 which connects the camera head 11102 and the CCU 11201 to each other is an electric signal cable ready for communication of an electric signal, an optical fiber ready for optical communication or a composite cable ready for both of electrical and optical communications.

Here, while, in the example depicted, communication is performed by wired communication using the transmission cable 11400, the communication between the camera head 11102 and the CCU 11201 may be performed by wireless communication.

The description has been given hereinabove of one example of the endoscopic surgery system, to which the technology according to an embodiment of the present disclosure is applicable. The technology according to an embodiment of the present disclosure is suitably applicable to, for example, the image pickup unit 11402 provided in the camera head 11102 of the endoscope 11100 of the configurations described above. Applying the technology according to an embodiment of the present disclosure to the image pickup unit 11402 makes it possible to provide the endoscope 11100 having high performance.

Although the description has been given hereinabove of the present disclosure with reference to the embodiment, the modification examples, the usage example, and the practical application examples, the present technology is not limited to the foregoing embodiment and the like, and may be modified in a wide variety of ways. For example, although the foregoing modification examples have been described as modification examples of the foregoing embodiment, the configurations of the respective modification examples may be combined as appropriate.

The photodetector according to an embodiment of the present disclosure includes: an optical circuit that is provided in a substrate containing silicon and includes a waveguide that is able to transmit an optical signal from a light source; an antenna that is provided in the substrate and is able to output the optical signal transmitted via the waveguide; a light-receiving element that is provided in the substrate and is able to receive the optical signal reflected by an object; and a light-blocking section that is provided around at least one of the antenna or the light-receiving element. It is therefore possible to suppress incidence of unnecessary light on the antenna, the light-receiving element, and the like. It becomes possible to achieve a photodetector that makes it possible to suppress incidence of a stray light component.

The photodetection system according to an embodiment of the present disclosure includes: a light source that is able to generate an optical signal; an optical circuit that is provided in a substrate containing silicon and includes a waveguide that is able to transmit an optical signal from a light source; an antenna that is provided in the substrate and is able to output the optical signal transmitted via the waveguide; a light-receiving element that is provided in the substrate and is able to receive the optical signal reflected by an object; and a light-blocking section that is provided around at least one of the antenna or the light-receiving element. It is therefore possible to suppress incidence of unnecessary light on the antenna, the light-receiving element, and the like. It becomes possible to achieve a photodetection system that makes it possible to suppress incidence of a stray light component.

It is to be noted that the effects described herein are merely exemplary and are not limited to the description, and may further include other effects. In addition, the present disclosure may also have the following configurations.
(1) A photodetector including:
   an optical circuit provided in a substrate containing silicon, the optical circuit including a waveguide configured to transmit an optical signal from a light source;
   an antenna provided in the substrate and being configured to output the optical signal transmitted via the waveguide;
   a light-receiving element provided in the substrate and being configured to receive the optical signal reflected by an object; and
   a light-blocking section provided around at least one of the antenna or the light-receiving element.
(2) The photodetector according to (1), in which the light-blocking section is provided next to the antenna in the substrate.
(3) The photodetector according to (1) or (2), including a plurality of the light-blocking sections provided to sandwich the antenna.
(4) The photodetector according to any one of (1) to (3), including a plurality of the antennas, in which
   the light-blocking section is provided between the plurality of the antennas adjacent to each other.
(5) The photodetector according to any one of (1) to (4), in which the light-blocking section is provided next to the light-receiving element in the substrate.
(6) The photodetector according to any one of (1) to (5), including the plurality of the light-blocking sections provided to sandwich the light-receiving element.
(7) The photodetector according to any one of (1) to (6), including a plurality of the light-receiving elements, in which
   the light-blocking section is provided between the plurality of the light-receiving elements adjacent to each other.
(8) The photodetector according to any one of (1) to (7), in which the light-blocking section extends in a thickness direction of the substrate.
(9) The photodetector according to any one of (1) to (8), in which
   the substrate includes a silicon layer having a first surface and a second surface on a side opposite to the first surface,
   the antenna and the light-receiving element are provided on a side of the first surface of the silicon layer, and
   the light-blocking section penetrates the silicon layer around at least one of the antenna or the light-receiving element.
(10) The photodetector according to any one of (1) to (9), in which
   the substrate includes the silicon layer and an insulating layer, the silicon layer having the first surface and the second surface on the side opposite to the first surface, the insulating layer being provided on a side of the second surface of the silicon layer,
   the antenna and the light-receiving element are provided on the side of the first surface of the silicon layer, and
   the light-blocking section penetrates the silicon layer and the insulating layer around at least one of the antenna or the light-receiving element.
(11) The photodetector according to any one of (1) to (10), in which the light-blocking section is configured using a metal material.
(12) The photodetector according to any one of (1) to (11), in which the light-blocking section is configured using an air gap.
(13) The photodetector according to any one of (1) to (12), in which the antenna is configured to output the optical signal of which a frequency is modulated.
(14) The photodetector according to any one of (1) to (13), in which the optical circuit includes a modulator configured to modulate the frequency of the optical signal transmitted via the waveguide.
(15) The photodetector according to (14), in which the antenna is configured to output the optical signal of which the frequency is modulated by the modulator and to receive the optical signal that is reflected by the object and delayed.
(16) The photodetector according to (14) or (15), in which
   the optical circuit includes an interference section configured to cause a portion of the optical signal, of which the frequency is modulated, transmitted from the modulator and the optical signal reflected by the object from the antenna to interfere with each other, and
   the light-receiving element is configured to receive the optical signal via the interference section.
(17) The photodetector according to any one of (14) to (16), in which the light-receiving element is configured to output a beat signal based on the optical signal from the modulator and the optical signal reflected by the object.
(18) The photodetector according to any one of (1) to (17), in which the photodetector includes an FMCW distance measurement apparatus.
(19) A photodetection system including:
   a light source configured to generate an optical signal;
   an optical circuit provided in a substrate containing silicon, the optical circuit including a waveguide configured to transmit the optical signal from the light source;
   an antenna provided in the substrate and being configured to output the optical signal transmitted via the waveguide;
   a light-receiving element provided in the substrate and being configured to receive the optical signal reflected by an object; and
   a light-blocking section provided around at least one of the antenna or the light-receiving element.

The present application claims the benefit of Japanese Priority Patent Application JP2022-190176 filed with the Japan Patent Office on November 29, 2022, the entire contents of which are incorporated herein by reference.

It should be understood by those skilled in the art that various modifications, combinations, sub-combinations, and alterations may occur depending on design requirements and other factors insofar as they are within the scope of the appended claims or the equivalents thereof.

## Claims

1. A photodetector comprising:
an optical circuit provided in a substrate containing silicon, the optical circuit including a waveguide configured to transmit an optical signal from a light source;
an antenna provided in the substrate and being configured to output the optical signal transmitted via the waveguide;
a light-receiving element provided in the substrate and being configured to receive the optical signal reflected by an object; and
a light-blocking section provided around at least one of the antenna or the light-receiving element.

2. The photodetector according to claim 1, wherein the light-blocking section is provided next to the antenna in the substrate.

3. The photodetector according to claim 1, comprising a plurality of the light-blocking sections provided to sandwich the antenna.

4. The photodetector according to claim 1, comprising a plurality of the antennas, wherein
the light-blocking section is provided between the plurality of the antennas adjacent to each other.

5. The photodetector according to claim 1, wherein the light-blocking section is provided next to the light-receiving element in the substrate.

6. The photodetector according to claim 1, comprising a plurality of the light-blocking sections provided to sandwich the light-receiving element.

7. The photodetector according to claim 1, comprising a plurality of the light-receiving elements, wherein
the light-blocking section is provided between the plurality of the light-receiving elements adjacent to each other.

8. The photodetector according to claim 1, wherein the light-blocking section extends in a thickness direction of the substrate.

9. The photodetector according to claim 1, wherein
the substrate includes a silicon layer having a first surface and a second surface on a side opposite to the first surface,
the antenna and the light-receiving element are provided on a side of the first surface of the silicon layer, and
the light-blocking section penetrates the silicon layer around at least one of the antenna or the light-receiving element.

10. The photodetector according to claim 1, wherein
the substrate includes a silicon layer and an insulating layer, the silicon layer having a first surface and a second surface on a side opposite to the first surface, the insulating layer being provided on a side of the second surface of the silicon layer,
the antenna and the light-receiving element are provided on a side of the first surface of the silicon layer, and
the light-blocking section penetrates the silicon layer and the insulating layer around at least one of the antenna or the light-receiving element.

11. The photodetector according to claim 1, wherein the light-blocking section is configured using a metal material.

12. The photodetector according to claim 1, wherein the light-blocking section is configured using an air gap.

13. The photodetector according to claim 1, wherein the antenna is configured to output the optical signal of which a frequency is modulated.

14. The photodetector according to claim 1, wherein the optical circuit includes a modulator configured to modulate a frequency of the optical signal transmitted via the waveguide.

15. The photodetector according to claim 14, wherein the antenna is configured to output the optical signal of which the frequency is modulated by the modulator and to receive the optical signal that is reflected by the object and delayed.

16. The photodetector according to claim 14, wherein
the optical circuit includes an interference section configured to cause a portion of the optical signal, of which the frequency is modulated, transmitted from the modulator and the optical signal reflected by the object from the antenna to interfere with each other, and
the light-receiving element is configured to receive the optical signal via the interference section.

17. The photodetector according to claim 14, wherein the light-receiving element is configured to output a beat signal based on the optical signal from the modulator and the optical signal reflected by the object.

18. The photodetector according to claim 1, wherein the photodetector comprises an FMCW distance measurement apparatus.

19. A photodetection system comprising:
a light source configured to generate an optical signal;
an optical circuit provided in a substrate containing silicon, the optical circuit including a waveguide configured to transmit the optical signal from the light source;
an antenna provided in the substrate and being configured to output the optical signal transmitted via the waveguide;
a light-receiving element provided in the substrate and being configured to receive the optical signal reflected by an object; and
a light-blocking section provided around at least one of the antenna or the light-receiving element.
